# EUROPÄISCHE PATENTANMELDUNG

(11) **EP 4 442 383 A1**
(43) Veröffentlichungstag der Anmeldung: **09.10.2024**
(21) Anmeldenummer: 24166616.3
(22) Anmeldetag: 27.03.2024
(51) Int. Cl.: B21D 22/16, B21D 39/03, B21C 37/10, F16L 9/17

(54) **VERFAHREN ZUR HERSTELLUNG EINES KORROSIONSGESCHÜTZTEN BAUTEILS**

(30) Priorität: 03.04.2023 DE 102023108431
(71) Anmelder: ThyssenKrupp Steel Europe AG, 47166 Duisburg (DE)
(72) Erfinder: Großerüschkamp, Thomas, 47119 Duisburg (DE)
(74) Vertreter: ThyssenKrupp Steel Europe AG

(57) **Zusammenfassung**

Die vorliegende Erfindung betrifft ein Verfahren zur Herstellung eines korrosionsgeschützten Bauteils (B) nach Anspruch 1.

## Beschreibung

Die Erfindung betrifft ein Verfahren zur Herstellung eines korrosionsgeschützten Bauteils.

Der Einsatz von beschichteten und geschweißten (thermisch gefügt) Rohren ist in Bereichen mit starken korrosiven Einflüssen problematisch aufgrund der Unterbrechung bzw. Schädigung der Beschichtung durch eine Schweißnaht und der dazu gehörigen Wärmeeinflusszone.

In diesen Bereichen ist somit ein ausreichender und effektiver Korrosionsschutz nicht gegeben oder je nach Blechstärke stark eingeschränkt. Wirksam ist nur der kathodische Schutz bei Verzinkungen über die sogenannte Fernwirkung des Zinks. Sondermaßnahmen wie ein nachträgliches Beschichten der Naht oder ein komplettes Stückverzinken sind aufwendig und teuer.

Durch das Clinchen (mechanisch gefügt) von Rohren ist es möglich, diese auch aus vorbeschichtetem Werkstoff herzustellen. Beim Clinchen greifen die Längskanten des Rohrs ineinander und bilden eine Kombination aus Kraft- und Formschluss, welcher das Rohr in Form hält. Beispielsweise kann hier die Fertigung von Hülsen im Fahrwerksbereich oder auch Gehäuse von Elektromotoren genannt werden. So ist beispielhaft in der DE 10 2017 123 825 A1 eine Verwendung einer Schalthülse aus einem geclinchten Rohr beschrieben.

Ein Nachteil sind die Schnittkanten des geclinchten Rohres, da diese durch einen Schneidprozess entschichtet werden und dass damit erzeugte Rohr/Bauteil über Kantenkorrosion geschädigt werden kann, wenn es einem diesbezüglich schädigenden Milieu ausgesetzt wird.

Der Erfindung liegt somit die Aufgabe zu Grunde, ein Verfahren zur Herstellung eines geclinchten Rohres anzugeben, mit welchem eine Kantenkorrosion im Wesentlichen ausgeschlossen respektive effektiv gesenkt werden kann.

Gelöst wird diese Aufgabe durch ein Verfahren mit den Merkmalen des Patentanspruchs 1 und durch ein Bauteil mit den Merkmalen des Patentanspruchs 8. In den Unteransprüchen sind weitere Ausgestaltungen beschrieben.

Gemäß einer ersten Lehre betrifft die Erfindung ein Verfahren zur Herstellung eines Bauteils umfassend folgende Schritte: - Bereitstellen eines mit einem Korrosionsschutzüberzug beschichteten geclinchten Rohrs mit einer Ausgangsdicke, welches entlang seiner formschlüssig verbundenen Längskanten einen Spalt aufweist; - zumindest abschnittsweises Verdichten des Rohrs in radialer Richtung mittels mindestens einer Formwalze in einer Drückwalzanlage.

Gemäß einer zweiten Lehre betrifft die Erfindung ein Bauteil bestehend aus einem mit einem Korrosionsschutzüberzug beschichteten geclinchten Rohrs, welches ineinandergreifende Längskanten aufweist, wobei die Längskanten entlang ihres Verlaufs auf mindestens 80 % ihrer Erstreckung im Wesentlichen in Kontakt stehen.

Der Erfinder hat festgestellt, dass durch die erfindungsgemäße Lehre eine Kantenkorrosion bei geclinchten Rohren verhindert respektive vermindert werden kann. Ein weiterer positiver Effekt ist eine Verbesserung der Rundheit der erzeugten Rohre/Bauteile.

Das Clinchen von Rohren ist Stand der Technik. Auch die Verwendung von mit einem Korrosionsschutzüberzug beschichteten Halbzeug, wie zum Beispiel von verzinkten Blechen zur Herstellung von geclinchten Rohren gehört ebenfalls zum bekannten Stand der Technik.

Als Halbzeuge respektive Stahlblechstreifen können Stahlsorten nach DIN EN 10025-2 bis -5 zur Anwendung kommen.

Die Ausgangsdicke der Halbzeuge kann zwischen 1,0 und 8,0 mm betragen. Die Ausgangsdicke kann insbesondere mindestens 1,5 mm, vorzugsweise mindestens 2,0 mm betragen und kann insbesondere auf maximal 6,0 mm, vorzugsweise auf maximal 5,0 mm begrenzt sein.

Der Korrosionsschutzüberzug kann auf Zinkbasis, Magnesiumbasis oder auf Aluminiumbasis ausgeführt sein.

Ein Korrosionsschutzüberzug auf Zinkbasis kann zum Beispiel eine Feuerbeschichtung sein, in Fachkreisen als "Z"-Beschichtung bekannt, zusätzlich als wärmbehandelte Schicht, sogenannte "ZF"-Beschichtung, oder mit Aluminium legierte Beschichtung, "Galfan" oder "ZA", oder Aluminium und Magnesium, auch als "ZM" bekannt, legierte Beschichtung.

Ein Korrosionsschutzüberzug auf Aluminiumbasis kann zum Beispiel eine Feuerbeschichtung sein, in Fachkreisen als "FAL"-Beschichtung bekannt, oder mit Zink legierte Beschichtung, "Galvalume" oder "AZ", oder mit weiteren Legierungselementen wie zum Beispiel Si, Fe, Mn.

Ein Korrosionsschutzüberzug auf Zinkbasis kann alternativ aus einem wässrigen Elektrolyten abgeschieden sein, in Fachkreisen als "ZE"-Beschichtung bekannt.

Ein Korrosionsschutzüberzug auf Magnesiumbasis kann aus einer Dampfphase abgeschieden sein, in Fachkreisen als CVD- oder PVD-Beschichtung bekannt.

Das Halbzeug kann eine Breite (Quererstreckung) zwischen 60 und 600 mm aufweisen.

Der Durchmesser, insbesondere der Innendurchmesser des Rohrs kann beispielhaft zwischen 20 und 200 mm liegen.

Gemäß einer Ausgestaltung wird durch das Verdichten eine Reduzierung des Spalts von einem Ausgangsspalt zu einem Endspalt erzielt, wobei der Endspalt kleiner ist als der Ausgangsspalt. Je näher die Längskanten zueinander gebracht werden, quasi im Wesentlichen einander kontaktieren, umso weniger Fläche oder Stellen verbleiben entlang des Verlaufs der Längskanten in ihrer Erstreckung, die blank (unbeschichtet) und somit offen zugänglich für Korrosionsangriffe sind. Ein technischer Nullspalt, somit Vollkontakt der Kanten und ein Spalt von 0 mm, kann zumindest abschnittsweise realisiert werden. Es wird trotzdem von einem Spalt gesprochen, auch wenn er 0 ist, da die Längskanten stofflich nicht miteinander verbunden sind, so wie dies beispielsweise beim Schweißen, Löten oder Kleben der Fall wäre.

Durch das zugrundeliegende Drückwalzen stehen die Längskanten entlang ihres Verlaufs auf mindestens 80 % ihrer Erstreckung am Bauteil im Wesentlichen in Kontakt. Insbesondere stehen die Längskanten entlang ihres Verlaufs auf mindestens 90 % ihrer Erstreckung am Bauteil im Wesentlichen in Kontakt. Je nach Art des Beschnitts und damit auch der Formschlusses respektive der Geometrie der ineinandergreifenden Längskanten können diese auch vollständig entlang ihres Verlaufs in ihrer Erstreckung in Kontakt stehen, somit bis zu 100 % bzw. einschließlich 100 %.

Gemäß einer Ausgestaltung wird durch das Verdichten eine Reduzierung der Ausgangsdicke auf eine Enddicke erzielt, wobei die Enddicke kleiner ist als die Ausgangsdicke. Durch das Einwirken der mindestens einen Formwalze wird eine Dickenreduktion bewirkt.

Gemäß einer Ausgestaltung erfolgt das Verdichten auf eine Enddicke, welche einer Reduzierung der Ausgangsdicke von mindestens 5 % bis zu 30 % entspricht. Eine Verdichtung respektive Dickenreduktion unterhalb von 5 % führt zu keiner nennenswerten Heranführung der Längskanten und dadurch auch nicht zur gewünschten Verringerung der Kantenkorrosion. Die Verdichtung respektive Dickenreduktion kann insbesondere mindestens 6 %, 7 %, 8 %, 9 %, vorzugsweise mindestens 10 %, 11 %, 12 %, 15 %, bevorzugt mindestens 14 %, 15 %, 16 % betragen, um die Längskanten entlang ihres Verlaufs in ihrer Längserstreckung im Wesentlichen in Kontakt zu bringen. Um ein Ausdünnen oder sogar eine Unterbrechung des Korrosionsschutzüberzugs durch das Drückwalzen zu vermeiden, ist die Verdichtung respektive Dickenreduktion auf maximal 30 % beschränkt, insbesondere auf maximal 29 %, 28 %, 27 %, vorzugsweise auf maximal 26 %, 25 %, 24 %, bevorzugt auf maximal 23 %, 22 %, 21 %.

Das zugrundeliegende Drückwalzen erzeugt mithin keinen Stoffschluss zwischen den Längskanten und kann ein Überlagern, quasi ein Verlagern des Korrosionsschutzüberzugs bewirken und damit auch den Endspalt vorteilhaft überdecken und damit die Kantenkorrosion verringern bzw. hemmen. Der Korrosionsschutzüberzug bedeckt das Bauteil im Wesentlichen durchgehend. Je nach Ausführung kann der Korrosionsschutzüberzug das Bauteil durchgehend bzw. vollständig bedecken. Der Korrosionsschutzüberzug kann auf dem Bauteil einseitig oder beidseitig aufgetragen sein.

Gemäß einer Ausgestaltung kann für das Verdichten des Rohrs ein Kern verwendet werden. Dabei wird das Rohr über den Kern gespült bzw. auf dem fixiert und dient als Widerlager während des Bearbeiten des Rohrs mit der mindestens einen Formwalze. Dadurch kann eine maßhaltige Rundheit insbesondere des Innendurchmessers, welcher auf dem Kern abgeformt wird, gewährleistet werden.

Gemäß einer alternativen Ausgestaltung kann das Verdichten des Rohrs kernlos, also ohne Verwendung eines Kerns, durchgeführt werden. Hierdurch ist es möglich, auch hinterschnittige Konturelemente zu erzeugen.

Gemäß einer Ausgestaltung wird das Verdichten des Rohrs im Gegenlaufprinzip durchgeführt. Beim Gegenlaufprinzip wird das geclinchte Rohr durch die mindestens eine angreifende Formwalze in axialer Vorschubrichtung gegen einen bevorzugt verwendeten Kern gepresst. Das während des Drückwalzens verdrängte Material ist somit gezwungen entgegen der Vorschubrichtung zu fließen. Das Gegenlaufprinzip bietet Vorteile bei Werkstoffen, die keine hohen Zugspannungen ertragen können.

Alternativ kann das Verdichten des Rohrs im Gleichlaufprinzip durchgeführt werden.

Das Bauteil kann unter anderem Verwendung finden als Ausgangsrohr für eine weitere Bearbeitung mit gängigen Umformverfahren, um ein korrosionsbeständiges Fertigbauteil zu erzeugen.

Näher erläutert wird die Erfindung anhand der folgenden Ausführungsbeispiele in Verbindung mit der Zeichnung.

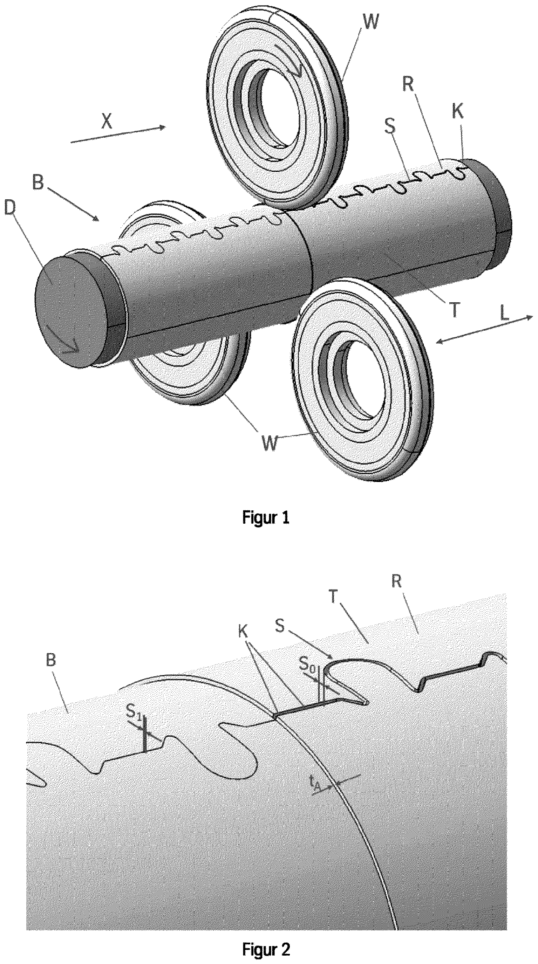

In **Figur** 1 ist dargestellt, dass ein mit einem Korrosionsschutzüberzug beschichtetes geclinchtes Rohr (R) mit einer Ausgangsdicke (T), welches entlang seiner Erstreckung kraft- und formschlüssig verbundene Längskanten (K) mit einem Spalt (S) aufweist, bereitgestellt wird. Das geclinchte Rohr (R) wird vorzugsweise auf einen Kern (D) gespannt und mit mindestens einer Formwalze (W) verdichtet. Im dargestellten Beispiel sind es drei Formwalzen (W), die gleichzeitig oder nacheinander das Rohr (R) bearbeiten können und zumindest abschnittsweise das Rohr (R) in radialer Richtung in einer Drückwalzanlage verdichten. Gemäß dem Massenerhaltungssatz wächst somit das Rohr (R) /Bauteil (B) in seiner Länge (L). Durch das Verdichten wird eine Reduzierung des Spalts (S) von einem Ausgangsspalt (s0) zu einem Endspalt (s1) erzielt, wobei der Endspalt (s1) kleiner ist als der Ausgangsspalt (s0), s. auch **Figur 2****,** welche einen Teilausschnitt des Rohrs (R) vergrößert zeigt. Durch das Verdichten wird eine Reduzierung (tA) der Ausgangsdicke (T) auf eine Enddicke erzielt, wobei die Enddicke kleiner ist als die Ausgangsdicke (T). Das Verdichten erfolgt auf eine Enddicke, welche einer Reduzierung (tA) der Ausgangsdicke (T) von mindestens 5 % bis zu 30 % entspricht, besonders bevorzugt in einem Maße, dass der Spalt (S), der sich verfahrensbedingt beim Clinchen einstellt, durch die Längskanten (K) entlang ihres Verlaufs auf mindestens 80 % ihrer Erstreckung im Wesentlichen in Kontakt stehen und dadurch der geschlossen wird, dass einen Kantenkorrosion stark verzögert oder verhindert wird. Dies wird zum einen durch die Verringerung des Spaltes (S) erreicht und zum anderen durch ein quasi Verlagern des Korrosionsschutzüberzugs auf der Oberfläche in dem Bereich des Spalts (S) bzw. des Endspalts (s1), so dass der Korrosionsschutzüberzug das Bauteil (B) im Wesentlichen durchgehend bedeckt.

Die beschriebenen Merkmale sind alle, soweit technisch möglich, miteinander kombinierbar. Erfindungsgemäße Bauteile (B) können als nicht dargestellte Halbzeuge für eine weitere umformtechnische Verarbeitung oder direkt als Fertigteile in Bereichen von stark korrosiven Umgebungen verwendet werden.

## Patentansprüche

1. Verfahren zur Herstellung eines Bauteils (B) umfassend folgende Schritte:
- Bereitstellen eines mit einem Korrosionsschutzüberzug beschichteten geclinchten Rohrs (R) mit einer Ausgangsdicke (T), welches entlang seiner formschlüssig verbundenen Längskanten (K) einen Spalt (S) aufweist;
- zumindest abschnittsweises Verdichten des Rohrs (R) in radialer Richtung mittels mindestens einer Formwalze (W) in einer Drückwalzanlage.

2. Verfahren nach Anspruch 1, wobei durch das Verdichten eine Reduzierung des Spalts (S) von einem Ausgangsspalt (s0) zu einem Endspalt (s1) erzielt wird, wobei der Endspalt (s1) kleiner ist als der Ausgangsspalt (s0).

3. Verfahren nach einem der vorgenannten Ansprüche, wobei durch das Verdichten eine Reduzierung (tA) der Ausgangsdicke (T) auf eine Enddicke erzielt wird, wobei die Enddicke kleiner ist als die Ausgangsdicke (T).

4. Verfahren nach einem der vorgenannten Ansprüche, wobei das Verdichten auf eine Enddicke erfolgt, welche einer Reduzierung (tA) der Ausgangsdicke (T) von mindestens 5 % bis zu 30 % entspricht.

5. Verfahren nach einem der vorgenannten Ansprüche, wobei für das Verdichten des Rohrs (R) ein Kern (D) verwendet wird.

6. Verfahren nach einem der Ansprüche 1 bis 4, wobei das Verdichten des Rohrs (R) kernlos durchgeführt wird.

7. Verfahren nach einem der vorgenannten Ansprüche, wobei das Verdichten des Rohrs (R) im Gegenlaufprinzip durchgeführt wird.

8. Verfahren nach einem der Ansprüche 1 bis 6, wobei das Verdichten des Rohrs (R) im Gleichlaufprinzip durchgeführt wird.

9. Bauteil (B) bestehend aus einem mit einem Korrosionsschutzüberzug beschichteten geclinchten Rohrs (R), welches ineinandergreifende Längskanten (K) aufweist, **dadurch gekennzeichnet, dass** die Längskanten (K) entlang ihres Verlaufs auf mindestens 80 % ihrer Erstreckung im Wesentlichen in Kontakt stehen.

10. Bauteil nach Anspruch 9, wobei die Längskanten (K) entlang ihres Verlaufs auf mindestens 90 % ihrer Erstreckung im Wesentlichen in Kontakt stehen.

11. Bauteil nach Anspruch 9 oder 10, wobei der Korrosionsschutzüberzug das Bauteil (B) im Wesentlichen durchgehend bedeckt.

12. Bauteil nach einem der Ansprüche 8 bis 11, wobei der Korrosionsschutzüberzug einseitig oder beidseitig aufgetragen ist.

13. Verwendung des Bauteils (B) nach einem der Ansprüche 9 bis 12 als Halbzeug für eine weitere umformtechnische Verarbeitung oder direkt als Fertigteil im Bereich von stark korrosiven Umgebungen.
